# EUROPEAN PATENT APPLICATION

(11) **EP 2 353 965 A2**
(43) Date of publication of application: **10.08.2011**
(21) Application number: 10380059.5
(22) Date of filing: 28.04.2010
(51) Int. Cl.: B62B 9/24

(54) **Protective railing for foldable baby pushchairs**

(30) Priority: 13.01.2010 ES 201030027 U
(71) Applicant: JANE, S.A., 08184 Palau Solita I Plegamans Barcelona (ES)
(72) Inventor: Jane Santamaria, Manuel, 08184 Palau Solita I Plegamans Barcelona (ES)
(74) Representative: Morgades y Manonelles, Juan Antonio

(57) **Abstract**

The purpose of this invention is to provide these types of pushchairs with a protective railing (2,3,4) that stops children leaving the seat and at the same time protects from accidental frontal impact, this railing (2,3,4) can be fitted to any pushchair of the aforementioned type without any modifications, for which the railing has an articulated frame (1) that fits to the articulations of the handlebar arm (8) with the front legs (9), the frame (1) presenting, at its ends, two stops (10,11) that rest on the back of the aforementioned articulations, in addition, the presence of this railing does not hinder the folding of the pushchair, as it folds automatically when folding the pushchair itself, the frame of the railing (2,3,4) is articulated in the linkage of the handlebar arms (8) with the front legs, by means of end side members that are finished with the aforementioned stops.

## Description

### OBJECT OF THE INVENTION

Protective railing for foldable baby pushchairs.

### FIELD OF THE INVENTION

This protective railing is applicable mainly to children's pushchairs that fold from top to bottom and transversally. The frame has sides that fold in their middle articulated part and which comprise the handlebar arms articulated to the front legs.

### BACKGROUND OF THE INVENTION

Foldable pushchairs with aforementioned features exist in different models, the classical model being called "umbrella" that finishes off the handlebar arms forming a crook that may be hung from the arm of the folded pushchair.

This type of pushchairs, with the aim that the children do not fall out of the seat, have safety straps which do not completely achieved the aforementioned objective, either by negligence in the arrangement of the straps or its securing with the corresponding buckle, due to the tendency of children of slip through the straps, or due to some flaws in the straps, caused, for example, by usage.

### SUMMARY OF THE INVENTION

The purpose of this invention is to provide these types of pushchairs with a protective railing that stops children leaving the seat and at the same time protects from accidental frontal impact.

This railing can be fitted to any pushchair of the aforementioned type without any modifications, for which the railing has an articulated frame that fits to the articulations of the handlebar arm with the front legs, the frame presenting, at its ends, two stops that rest on the back of the aforementioned articulations.

In addition, the presence of this railing does not hinder the folding of the pushchair, as it folds automatically when folding the pushchair itself.

The frame of the railing is articulated in the linkage of the handlebar arms with the front legs, by means of end side members that are finished with the aforementioned stops.

These and other characterizing features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Figures 1 and 2 show respectively a perspective view of the railing object of the invention fitted to a pushchair, and a detail of this railing from the back,
Figures 3 and 4 show respectively a perspective view of the railing fitted to a pushchair in semi-folded position, and a detail of the railing from the back in this position, and
Figure 5 shows the pushchair, with the railing folded.

According to the drawings, the protective railing has an articulated frame (1) composed of three front sections (2, 3 y 4) and two end side members (5 and 6) that are articulated in a central point to the axis (7) of linkage of the handlebar arms (8) with the front legs (9) of the pushchair, this linkage comprising two circular superimposed parts that extend peripherally with the tubular projections to which the arms (8) of the handlebar and front legs (9) are fitted respectively.

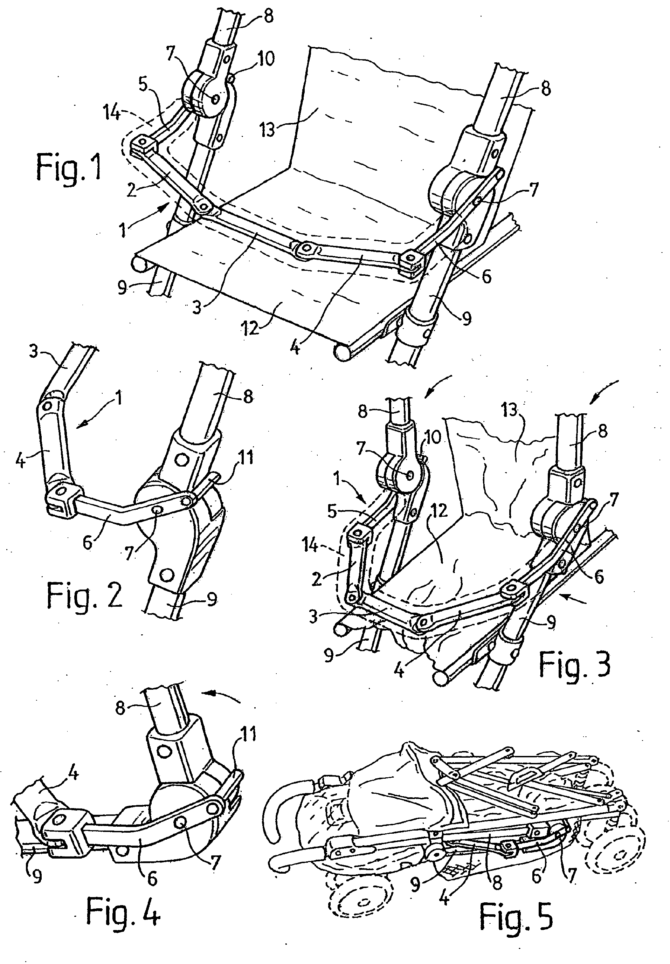

The end side members (5 and 6) are finished with stops (10 and 11) that rest on the back of the aforementioned articulations (Figures 1 and 2).

This support stabilises the layout of the railing, the stops (10 and 11) impacting the lower articulated end of the handlebar arms (8).

When the pushchair is folded, the handlebar arms (8) turn towards the front legs (9) (Figures 3 and 4) and the sides of the frame come closer to each other. This folding is not hindered by the railing, the frame (1) of which also folds automatically, the folded pushchair is seen as illustrated in Fig. 5.

References (12 and 13) refer respectively to the seat and the flexible backrest, and reference (14) refers to the soft coating of the frame (1).

The invention can within its essentiality be put into practice in other embodiments differing only in detail from the one having been described above only by way of example, said other embodiments also falling within the scope of the protection being claimed. This protective railing for foldable baby pushchairs may thus be manufactured in any shape and size, with the most suitable means and materials and with the most convenient accessories, and the components may be replaced by others that are technically equivalent, as all of this is contained within the spirit of the claims.

## Claims

1. Protective railing for foldable baby pushchairs, comprising an articulated frame that fits to the front area of the pushchair frame, **characterised in that** the frame fits to the articulations of the handlebar arm with the front legs, the frame presenting, at its ends, two stops that rest on the back of the aforementioned articulations.

2. Protective railing for foldable baby pushchairs, according to claim 1, **characterised in that** in the unfolded position of the pushchair, the end stops of the frame rest against the lower articulated ends of the handlebar arms stabilizing the active position of the railing.

3. Protective railing for foldable baby pushchairs, according to claim 1, **characterised in that** the frame is articulated in the linkage of the handlebar arms with the front legs, by means of end side members that are finished with the aforementioned stops.
